# EUROPÄISCHE PATENTANMELDUNG

(11) **EP 0 749 917 A2**
(43) Veröffentlichungstag der Anmeldung: **27.12.1996**
(21) Anmeldenummer: 96108320.1
(22) Anmeldetag: 24.05.1996
(51) Int. Cl.: B65G 17/26, B65B 35/04, B65G 15/10

(54) **Gruppier- und Puffervorrichtung**

(30) Priorität: 19.06.1995 DE 19522189
(71) Anmelder: Gerhard Schubert GmbH, D-74564 Crailsheim (DE)
(72) Erfinder: Schubert, Gerhard, 74564 Crailsheim (DE)
(74) Vertreter: Alber, Norbert

(57) **Zusammenfassung**

Es wird eine Gruppier- und Puffervorrichtung zum Sammeln stückiger Produkte in einem Zuführbereich, zum Zwischenspeichern dieser Produkte sowie zum Bereitstellen einer Anzahl dieser Produkte zur Entnahme in Entnahmegruppen in einem Entnahmebereich und bestehend aus wenigstens einem Endlosförderer, den Mitnehmern zur Aufnahme und zum Transport der Produkte, und einem Zuförderer der Produkte, vorgestellt, so daß sie einerseits die unregelmäßig antransportierten, zu verpackenden stückigen Produkte annimmt und vorübergehend speichert, und andererseits eine gruppenweise Abnahme der Produkte zur Abgabe z.B. an eine Verpackungsmaschine ermöglicht, dabei jedoch so einfach und kostengünstig wie möglich ausgebildet ist, einen geringen Grundflächen-Bedarf besitzt und möglichst hohe Arbeitsgeschwindigkeiten erlaubt. Dabei sind wenigstens zwei parallele Endlosförderer vorhanden, die mit wenigstens einem Trum parallel zueinander laufen, jeder Endlosförderer hat wenigstens eine Gruppe von Mitnehmern, und die Endlosförderer sind unabhängig voneinander steuerbar.

## Beschreibung

Die Erfindung betrifft eine Gruppier- und Puffervorrichtung zum Sammeln einzelner, stückiger Produkte, Weitertransportieren und Zwischenspeichern dieser Produkte und gruppenweiser Bereitstellung dieser Produkte.

Derartige Maschinen werden insbesondere benötigt zur Anordnung zwischen Herstellmaschinen bzw. Primär-Verpackungsmaschinen, die ihre Produkte einzeln und in nicht unbedingt gleichmäßigen zeitlichen Abständen ausstoßen, und Verpackungsmaschinen, welche diese einzelnen Produkte in Gruppen in eine Umverpackung, etwa einen Karton, in größerer Anzahl gruppenweise einlegen, wobei dieses gruppenweise Einlegen zeitlich streng getaktet vonstatten gehen muß, um die Konstruktion bzw. Steuerung dieser Sekundär-Verpackungsmaschine nicht unnötig zu komplizieren.

Darüberhinaus können derartige Gruppier- und Puffervorrichtungen jedoch auch im Zusammenhang mit anderen Verarbeitungs-Linien eingesetzt werden, etwa wenn umgekehrt in Gruppen streng getaktet angelieferte Produkte vereinzelt und in unregelmäßigen Zeitabständen weitergegeben werden müssen. Dies ist beispielsweise in der Elektronikindustrie bei der Nachschubversorgung von Bestückungsautomaten für elektronische Platinen mit den einzelnen elektronischen Bauteilen der Fall.

Von dem Zusammenstellen zu Gruppen der vorher einzelnen, stückigen Produkte und dem Ausgleich der zeitlichen Unregelmäßigkeiten beim Anliefern der einzelnen Produkte wird die Ausfallhäufigkeit und damit Effizienz der gesamten Herstellungs- und Verpackungsstraße maßgeblich bestimmt. Darüberhinaus ist die Geschwindigkeit sowohl der Anlieferungsseite als auch der Abnahmeseite gegenüber der Geschwindigkeit der vorliegenden Maschine oft höher, so daß die Geschwindigkeit der vorliegenden Maschine auch den Ausstoß der Gesamtanlage bestimmt.

Aus der DE-PS-503 342 ist es bekannt, um zwei waagerecht liegende Umlenkräder eine Kette umlaufen zu lassen, welche die Mitnehmer trägt. Da die Umlenkräder jedoch stationär angeordnet sind, gibt es keine Möglichkeit, das eine Trum, etwa auf der Entnahmeseite, festzuhalten, und gleichzeitig das andere Trum, welches der Abnahmeseite entspricht, zu bewegen.

Demgegenüber ist es aus der DE-PS-37 24 839 bekannt, die beiden Umlenkräder einer solchen Maschine in einem längsverfahrbaren Schlitten zu lagern, und diesen Schlitten über beiderseits angreifende Schnecken so zu verfahren, daß auf Wunsch das eine der beiden Trume des Endlosförderers in Ruhe bleibt, während das andere Trum bewegt wird, um etwa die laufend ankommenden stückigen Produkte einzeln aufnehmen zu können.

Diese Lösung funktioniert in der Praxis, hat jedoch die prinzipiellen Nachteile eines im Grundriß relativ großen Flächenbedarfes und daß Aufnahmebereich und Entnahme-bereich in verschiedenen Trumen des Endlosförderers liegen, und somit die im Endlosförderer aufgenommenen Produkte um eines der Umlenkräder herumgeführt werden müssen. Dadurch werden bei hohen Geschwindigkeiten des Endlosförderers die Produkte durch die Fliehkraft nach außen gedrückt. Ein Herausfahren aus dem Endlosförderer kann durch ein Leitblech etc. zwar verhindert werden, jedoch können hierdurch dennoch Probleme durch Beschädigungen an den Verpackungen etc. oder eine Beschränkung in der Maximalgeschwindigkeit auftreten.

Weiterhin ist die Herstellung der vorgenannten Vorrichtung sowohl mechanisch als auch steuerungsseitig aufwendig.

Es ist daher die Aufgabe der vorliegenden Erfindung, eine Vorrichtung der eingangs genannten Gattung zu schaffen, so daß sie einerseits die unregelmäßig antransportierten, zu verpackenden stückigen Produkte annimmt und vorübergehend speichert, und andererseits eine gruppenweise Abnahme der Produkte zur Abgabe z.B. an eine Verpackungsmaschine ermöglicht, dabei jedoch so einfach und kostengünstig wie möglich ausgebildet ist, einen geringen Grundflächen-Bedarf besitzt und möglichst hohe Arbeitsgeschwindigkeiten erlaubt.

Diese Aufgabe wird durch die kennzeichnenden Merkmale des Anspruches 1 gelöst. Vorteilhafte Ausführungsformen ergeben sich aus den Unteransprüchen. Dadurch, daß die Aufnahmeelemente der Maschine nicht auf einem, sondern auf wenigstens zwei getrennten Endlosförderern untergebracht sind, aber dennoch entlang einer innerhalb der Funktionsbereiche fluchtenden Linie bewegt werden, und diese beiden Endlosförderer unabhängig voneinander steuerbar sind, kann der notwendige zeitliche Ausgleich dadurch erfolgen, daß der eine Endlosförderer, der eine erste Gruppe von Mitnehmern trägt, diese Gruppe gerade zum Entnahmebereich bewegt, während der zweite Endlosförderer mit einer anderen Gruppe von Mitnehmern diese innerhalb des Aufnahmebereichs zur Befüllung mit Produkten vorwärts bewegt.

Am einfachsten läßt sich das Prinzip anhand von zwei parallelen Endlosförderern beschreiben, die jeweils eine Gruppe von hintereinanderliegenden, einzelnen Mitnehmern aufweisen:
Vorzugsweise werden dabei die beiden Endlosförderer in vertikalen Ebenen parallel zueinander liegen, und das Funktionstrum wird jeweils das obere der beiden Trume jedes Endlosförderers sein, die nahe beieinander und parallel zueinander liegen.

Dabei befinden sich die Mitnehmer der verschiedenen Endlosförderer entlang der Funktionstrume auf einer einzigen, fluchtenden Linie:
Die Mitnehmer, die auf den z.B. Ketten oder Zahnriemen dieser Endlosförderer angebracht sind, liegen außerhalb des Umfanges der Endlosförderer und damit am obenliegenden Funktionstrum oberhalb der Kette. Die Befestigungen der Mitnehmer gegenüber der Kette sind außermittig angeordnet, so daß durch umgekehrte Montage der gleichen Mitnehmer an den beiden Ketten der Endlosförderer die Mitnehmer einerseits beide Ketten übergreifen und andererseits - unabhängig davon, an welchem der beiden Endlosförderer sie befestigt sind - sich entlang der Funktionstrume auf einer einzigen, fluchtenden Linie befinden.

Die Endlosförderer werden dabei immer nur in einer Richtung, der Vorwärtsrichtung bewegt. Am Anfang des Funktionstrumes befindet sich der Zufuhrbereich für die einzelnen Produkte, und etwa am Ende dieses Funktionsbereiches, also innerhalb desselben, oben liegenden Trumes der Endlosförderer, der Entnahmebereich.

Dadurch ist es möglich, die Gruppe von Mitnehmern, die am ersten Endlosförderer befestigt sind, im Zufuhrbereich jeweils nach der Aufnahme eines Produktes um eine Position weiter zu verfahren durch schrittweises Antreiben dieses Endlosförderers, und dadurch in Abhängigkeit von der Anlieferung der einzelnen Produkte diese Gruppe von Mitnehmern zu füllen.

Ist diese Gruppe von Mitnehmern vollständig gefüllt, wird sie entlang des Funktionstrumes weiterverfahren in den Entnahmebereich, wo eine ganze Entnahme-Gruppe von Produkten aus der Mitnehmergruppe entnommen wird. Die entnommene Gruppe kann der Anzahl nach mit der Anzahl der Gruppe von Mitnehmern übereinstimmen, oder eine Teilmenge dieser Mitnehmergruppe sein, so daß bei der Entnahme möglicherweise die Gruppe von Mitnehmern mit Hilfe dieses Endlosförderers nochmals bewegt werden muß.

Unabhängig davon wird unmittelbar nach Verfahren der gefüllten Gruppe aus dem Zufuhrbereich heraus eine Gruppe von Mitnehmern des anderen Endlosförderers, die bisher in einer Wartestellung etwa im unteren, funktionslosen Rück-Trum des Endlosförderers stationiert war, in den Zufuhrbereich verbracht, so daß die Aufnahme der einzeln, zeitlich ungleichmäßig angelieferten Produkte unterbrechungslos weitergehen kann.

Von der Ungleichmäßigkeit der Anlieferung der einzelnen Produkte im Aufnahmebereich hängt es ab, wie groß die Anzahl der Mitnehmer pro Gruppe sein muß, um die notwendige zeitliche Ausgleichsfunktion sicherzustellen.

Unter Umständen kann es dabei notwendig sein, pro Endlosförderer mehr als eine Gruppe von Mitnehmern anzuordnen, wobei jeweils, in Umfangsrichtung der Endlosförderer betrachtet, eine Gruppe des einen Endlosförderers auf eine Gruppe des anderen Endlosförderers folgen muß.

Um den notwendigen räumlichen Ausgleichsspielraum zu haben, kann es bei zwei Endlosförderern auch notwendig sein, die Endlosförderer so auszubilden, daß der Funktionsbereich, also die Strecke vom Aufnahmebereich bis zum Entnahmebereich, deutlich weniger als die Hälfte der Gesamtlänge des Endlosförderers ausmacht, beispielsweise dadurch, daß der Funktionsbereich deutlich kürzer ist als die Länge des Funktionstrumes, in dem sich der Funktionsbereich befindet. Auf diese Art und Weise ist beispielsweise die Anordnung von je zwei Gruppen von Mitnehmern auf nur einem Endlosförderer möglich.

Ein Vorteil besteht darin, daß Zufuhrbereich und Entnahmebereich sich jeweils im gleichen Trum des Endlosförderers befinden können und damit keine Umlenkung der im Endlosförderer aufgenommenen Produkte notwendig ist. Dadurch sind sehr hohe Arbeitsgeschwindigkeiten des Endlosförderers möglich.

Ein weiterer Vorteil besteht in dem geringen Grundflächenbedarf, speziell dann, wenn die einzelnen Endlosförderer in vertikalen Ebenen angeordnet sind.

Dadurch ist es auch möglich, mehrere solcher Gruppier- und Puffervorrichtungen parallel nebeneinander anzuordnen. Wenn man dabei die einzelnen Vorrichtungen unterschiedlich lang ausbildet, kann beispielsweise im rechten Winkel zum Endlosförderer, aber jeweils axial versetzt, die Zuführung der Produkte erfolgen, während die Entnahmebereiche der einzelnen Vorrichtungen auf gleicher Höhe nebeneinander liegen, und damit von einer Entnahmevorrichtung, also einem Entnahmeroboter, sehr gut angefahren werden können, etwa um aus den nebeneinanderliegenden Gruppiervorrichtungen jeweils Gruppen unterschiedlicher Produkte, z.B. unterschiedlicher Pralinen, zu entnehmen, die in einer gemeinsamen Umverpackung, etwa einer Pralinenschachtel, abgelegt werden.

Besonders einfache bauliche Lösungen lassen sich dabei erzielen, wenn die Mitnehmer alle gleich gestaltet sind, und nebeneinander eine Anzahl von Befestigungsmöglichkeiten entsprechend der Anzahl der nebeneinanderliegenden Endlosförderer besitzen. Dabei kann jeder Mitnehmer bzw. jede Gruppe von Mitnehmern am Außenumfang einer der Endlosförderer befestigt werden, was dann besonders einfach ist, wenn die Mitnehmer selbst ihrerseits in seitlichen Führungen geführt werden, so daß nur noch die Transportbewegung von den Endlosförderern auf die Mitnehmer übertragen werden muß.

Dabei muß auch nicht jeder einzelne Mitnehmer mit einem der Endlosförderer, beispielsweise einer Transportkette, verbunden werden. Es ist auch möglich, die einzelnen Mitnehmer innerhalb einer Gruppe gelenkig miteinander zu verbinden, und nur einen Mitnehmer jeder Gruppe mit der relevanten Förderkette zu verbinden, vorzugsweise den ersten oder letzten Mitnehmer, so daß die gesamte Gruppe immer durch Zug oder Druck spielfrei gehalten wird, und sich die einzelnen Mitnehmer innerhalb der Gruppe immer im selben axialen Abstand zueinander befinden.

In der Regel werden sich die Mitnehmer auch außerhalb des Umfanges der Transportkette befinden, also von den im wesentlichen ringförmigen Endlosförderern radial nach außen abstreben. Dabei kann der einzelne Mitnehmer auch aus mehreren Mitnehmer-Teilen bestehen, die ihrerseits wiederum gelenkig miteinander verbunden sind. Bei nur zwei Mitnehmerteilen könnte jedes der Teile eine Flanke des Mitnehmers bilden, zwischen welchen das aufzunehmende stückige Produkt anschließend gehalten wird.

Dies hat beispielsweise den Vorteil, daß sich die radial abstrebenden Mitnehmer-Teile bei der Herumführung um eine Umlenkrolle V-förmig nach außen öffnen, so daß bei Zuführung von Produkten in diesem Bereich eine einfache Zuführung der Produkte und durch das anschließende parallele Aneinanderannähern der Entnahme-Teile beim Erreichen des geradlinigen Funktionstrumes eventuell sogar eine begrenzte Klemmung des Produktes zwischen den einzelnen Teilen des Mitnehmers erreicht werden kann.

Ein weiterer Vorteil bei dieser Lösung besteht darin, daß die einzelnen Teile, z.B. Vorderteil und Rückteil eines Mitnehmers nicht direkt in einer Schlange miteinander verbunden sein müssen:
Setzt man an Stelle eines Endlosförderers zwei parallel nebeneneinanderliegende Teil-Endlosförderer ein, so ist es möglich, die aus den einander entsprechenden, z.B. den Vorderteilen der Mitnehmer bestehende Schlange an dem einen Teil-Endlosförderer zu befestigen, und die aus den anderen Teil-Mitnehmern, z.B. den Hinterteilen, bestehende Schlange an dem anderen Teil-Endlosförderer zu befestigen.

Durch Relativbewegung der beiden Endlosförderer zueinander kann der Abstand von Vorderteil und Hinterteil der einzelnen Mitnehmer über den gesamten Endlosförderer gleichmäßig verstellt werden, z.B. wenn sich die Abmessungen der aufzunehmenden Produkte ändern.

In begrenztem Umfang ist diese Einstellung auch mit einem einzigen Endlosförderer möglich, indem etwa die aus den einen Teilen, etwa den Vorderteilen, bestehende Schlange direkt mit dem Endlosförderer verbunden ist, und die aus den anderen, etwa den Hinterteilen, bestehende Schlange zwar ebenfalls mit demselben Endlosförderer verbunden ist, aber in Förderrichtung relativ zu diesem begrenzt bewegbar bzw. verstellbar ist.

Zusätzlich ist eine Steuerung lediglich hinsichtlich Verfahrlänge und Geschwindigkeit der einzelnen Endlosförderer notwendig, was vergleichsweise einfach durch gut steuerbare Motoren, z.B. Schrittmotoren, möglich ist. Eine aufwendige mechanische Ausgestaltung ist nicht notwendig.

Eine andere Möglichkeit besteht darin, mit mehr als zwei Endlosförderern zu arbeiten, die zusammenwirken, indem ihre Funktionstrume parallel zueinander angeordnet sind. Dadurch kann unter Umständen jeder Endlosförderer mit nur einer Gruppe von Mitnehmern ausgestaltet werden.

Üblicherweise werden bei derartigen Maschinen die stückigen Produkte rechtwinklig zur Transportrichtung der Endlosförderer angeliefert, also bei senkrechtliegenden Endlosförderern mit waagerecht geführtem, meist oben liegendem Funktionstrum wird die Anlieferung waagerecht von der Seite oder senkrecht rechtwinklig zum Funktionstrum von oben hin erfolgen. Mindestens in die jeweils vorhandene Anlieferungsrichtung müssen die Mitnehmer, die entsprechend der abzunehmenden Produkte Ausbuchtungen oder Hohlräume aufweisen, offen zugänglich sein.

Dies muß jedoch nicht immer der Fall sein, sondern richtet sich nach dem Einzelfall der Anwendung:
So ist es z.B. möglich, zwar die stückigen Produkte rechtwinklig zur Transportrichtung des Funktionstrumes des Endlosförderers anzuliefern, aber nicht unbedingt auch rechtwinklig zur Gesamtebene des Endlosförderers, sondern etwa in dieser Ebene radial von außen auf den Endlosförderer zu.

Ebenso ist es möglich, die Zuführung wie oben dargelegt senkrecht, jedoch nicht innerhalb desselben Trumes, welches auch den Entnahmebereich enthält, sondern im vorangehenden Trum durchzuführen. Dadurch ist zwar dazwischen eine Umlenkung der Produkte um eine der Umlenkrollen mit den damit verbundenen Schwierigkeiten aufgrund von Fliehkraft und möglicher Beschädigung gegeben, auf der anderen Seite findet dadurch automatisch eine Wendung des Produktes um 180° statt, die notwendig oder erwünscht sein kann.

Eine weitere Möglichkeit ist die Zuführung weder im Trum des Entnahmebereiches noch in dem vorausgehenden trum, sondern gerade im Bereich der dazwischen angeordneten Umlenkrolle. Dadurch ist es einerseits möglich, die Zuführungsrichtung parallel zur Transportrichtung des Endlosförderers im Funktionstrum bzw. in dem den Entnahmebereich enthaltenden Trum zu wählen, und darüberhinaus findet im Bereich der Umlenkrolle bei mehrteilig ausgebildeten Mitnehmern, deren Einzelteile im Bereich der Umlenkrolle von dieser radial abstreben, eine V-förmige Aufspreizung des Zwischenraumes zwischen den Teilen der Mitnehmer statt. Dadurch ist das Einführen von Produkten in diesem Bereich besonders einfach, und zusätzlich kann durch das nachfolgende Verringern des Freiraumes in den Mitnehmern nach dem Verlassen der Umlenkrolle sogar eine Klemmung der Produkte in den Mitnehmern erreicht werden. Dies läßt sich insbesondere dadurch sinnvoll ergänzen, wenn die Entnahme eventuell ebenfalls im Bereich der nächsten Umlenkrolle stattfindet, wobei diese Umlenkrolle je nach Grad der gewünschten Aufpreizung mit einem entsprechend großen Radius ausgestattet werden kann.

Denn bei Verwendung von nur zwei Endlosförderern ist ein sehr einfacher mechanischer Aufbau möglich, und zwar unabhängig von der notwendigen Länge des spezifischen Endlosförderers, indem die Umlenkritzel, von denen das eine als Antriebsritzel dient, jeweils in einem stranggepreßten Profil gelagert sind, welches für den spezifischen Anwendungsfall lediglich auf Länge geschnitten und an seinen Enden entsprechend ausgespart werden muß unter Verwendung einer entsprechend langen, passenden Kette. Auf derart ausgebildete, parallel liegende, meist vertikale Kettenförderer-Einheiten, kann jeweils ein Servomotor auf jeweils eines der Antriebsritzel seitlich und vom anderen Kettenförderer abgewandt problemlos aufgesetzt werden und dabei vorzugsweise nicht an den miteinander fluchtenden Umlenkrädern, sondern die beiden Servomotoren befinden sich vorzugsweise an den einander gegenüberliegenden Enden der Maschine.

Ein weiterer Vorteil einer solchen Anordnung besteht darin, daß die für die Endlosförderer verwendeten Ketten seitlich auf jeweils einer Seite aus den Augen der Kette herausragende Bolzen aufweisen, und auf - wiederum vom jeweils anderen Kettenförderer wegweisenden - Bolzen die Mitnehmer mit einer entsprechenden Bohrung einfach von außen aufgesteckt werden können. Das in gleiche Richtung Herabrutschen oder seitliche Verlagern der Mitnehmer wird durch einfaches seitliches Ansetzen einer Sicherungsplatte vermieden, die mit dem Tragprofil verschraubt wird.

Auf diese Art und Weise wird durch Abnehmen der Sicherungsplatte ein sehr schnelles und simples Austauschen, Ergänzen oder Reduzieren von Mitnehmern an einem Endlosförderer möglich.

Will man sich diese Möglichkeit auch bei mehr als zwei Endlosförderern in einer Maschine erhalten, so ist dies nur möglich, indem das funktionslose Rücklauftrum z.B. des mittleren Endlosförderers tiefer liegt als die funktionslosen Rücklauftrume der beiden außenliegenden Endlosförderer. Damit kann hinsichtlich Montage der Mitnehmerelemente bei den außen liegenden Endlosförderern wie vorbeschrieben vorgegangen werden, während beim mittleren Endlosförderer das Auswechseln zwar analog geschieht, jedoch lediglich im seitlich zugänglichen, da tiefer liegenden funktionslosen Rücklauftrum möglich ist. Das seitliche Anschrauben der Sicherungsplatte ist dennoch problemlos möglich.

Um das seitliche Ansetzen der Servomotoren an das Antriebsritzel zu ermöglichen, trotz des geringen Parallelabstandes der einzelnen Endlosförderer, können deren Umlenkräder und Antriebsritzel in Längsrichtung der Kettenförderer versetzt angeordnet sein, so daß sich auf den Außenseiten der Antriebsritzel kein fluchtendes anderes Ritzel eines benachbarten Kettenförderers befindet.

Eine Ausführungsform gemäß der Erfindung wird im folgenden beispielhaft näher beschrieben. Es zeigen:
- Fig. 1:: eine Prinzipdarstellung der erfindungsgemäßen Vorrichtung,
- Fig. 2: eine Lösung mit drei Endlosförderern,
- Fig. 3: eine Aufsicht auf eine Lösung mit mehreren erfindungsgemäßen Vorrichtungen, von denen eine die in Fig. 2 dargestellte ist, und
- Fig. 4: eine Seitenansicht eines der beiden Endlosförderer.

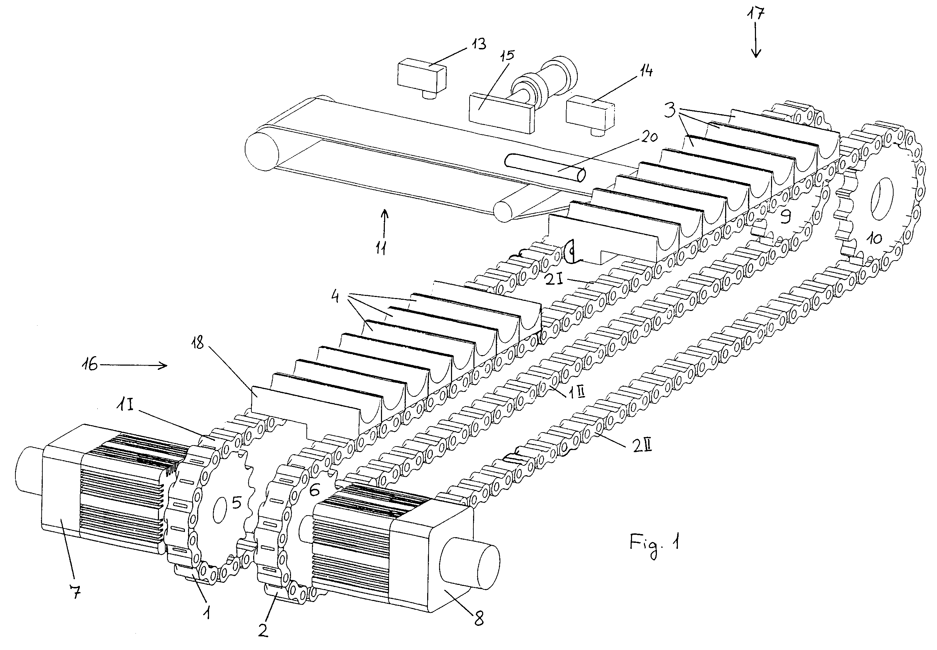

Fig. 1 zeigt in einer Prinzipdarstellung die erfindungsgemäße Maschine, ohne Grundgestell, Gehäuse, Lagerstellen etc..

Dabei werden die einzelnen Produkte 20 auf dem Förderband des Zuförderers waagerecht und in etwa rechtem Winkel zur erfindungsgemäßen Maschine angeliefert und dort im Zuführbereich 17 in den Mitnehmern 3, 4, die entsprechende Ausbuchtungen oder Aufnehmungen aufweisen, abgelegt. In Längsrichtung versetzt werden die Produkte 20 dann im Entnahmebereich 16 in Gruppen entnommen, was zur gleichen oder zur gegenüberliegenden Seite wie der Zuförderer 11 hin geschehen kann.

Die Entnahmevorrichtung ist nicht dargestellt. Es kann sich dabei um Greifer, Schieber oder Ähnliches handeln, und die Gruppengröße der Entnahmeeinheiten kann entweder der Anzahl von Mitnehmern 4 der Gruppe 18 entsprechen, oder ein ganzzahliger Bruchteil davon sein.

Die Mitnehmer 3, 4 sind - unabhängig davon, daß sie auf unterschiedlichen Endlosförderern 1, 2 befestigt sind, zueinander in Transportrichtung, also in Längsrichtung des Funktionstrumes 1l, 2l, fluchtend angeordnet. Dies wird dadurch erreicht, daß die beiden in vertikalen Ebenen geführten Endlosförderer 1, 2 parallel zueinander in einem so geringen Abstand angeordnet sind, daß die Mitnehmer 3, 4 des einen Endlosförderers 1, 2 auf den jeweils anderen Endlosförderer 2, 1 übergreifen. Dieses Übergreifen ist jedoch für die Funktion nicht unbedingt notwendig. Beispielsweise könnten die Endlosförderer auch weiter auseinanderliegen, und die Mitnehmer 3, 4 von jedem der Endlosförderer aus in dem Bereich zwischen die beiden Endlosförderer hineinragen.

Dies würde jedoch zu einem erhöhten Raumbedarf führen.

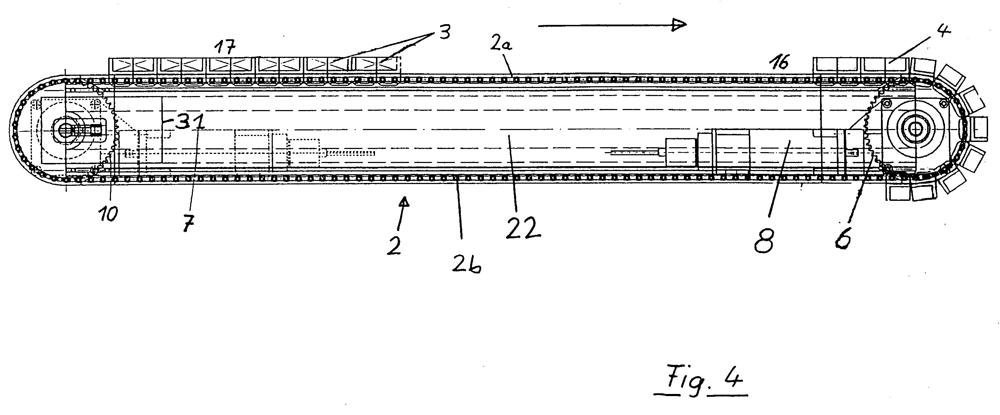

Ein Übergreifen der beiden Endlosförderer 1, 2, bei denen es sich im Beispiel der Figur 1 um übliche Antriebsketten handelt, ist insbesondere dann notwendig, wenn die Mitnehmer 3,4 seitlich waagerecht durch Aufschieben oder Einschieben mit der Kette verbunden werden können, und das Aufschieben an der freien, vom gegenüberliegenden Endlosförderer 2, 1 abgewandten, Seite des Endlosförderers 1 her geschehen soll, wie insbesondere in Figur 4 dargestellt.

Die einzelnen Mitnehmer 3, 4 sind jeweils einzeln mit dem Endlosförderer 1, 2 verbunden, um die Biegung der Kette beim Herumführen um Antriebsritzel 5, 6 oder Umlenkritzel 9, 10 vollziehen zu können.

Der Zuförderer 11 verfügt auf der Strecke vor dem Erreichen des Zuführbereiches 17 der Endlosförderer 2 in Laufrichtung des Zuförderers 11 über beabstandete Fotozellen 13, 14 und einen dazwischen angeordneten quer zum Zuförderer 11 auf die darauf liegenden Produkte 20 einwirkenden Schieber 15. Dieser wird so angesteuert, daß bei zu schneller Folge von Produkten 20 auf dem Zuförderer 11 mittels des Schiebers 15 einzelne Produkte seitlich vom Zuförderer 11 heruntergeschoben werden, um einen ausreichenden Mindestabstand der Produkte 20 auf dem konstant laufenden Zuförderer 11 zu erreichen, um eine ausreichende Zeitspanne zur Verfügung zu haben, um im Zuführbereich 17 den entsprechenden Endlosförderer 1 oder 2 um einen Mitnehmer 3 bzw. 4 weiterbewegen zu können, zur Aufnahme des nächsten Produktes 20 in einem leeren Mitnehmer 3,4.

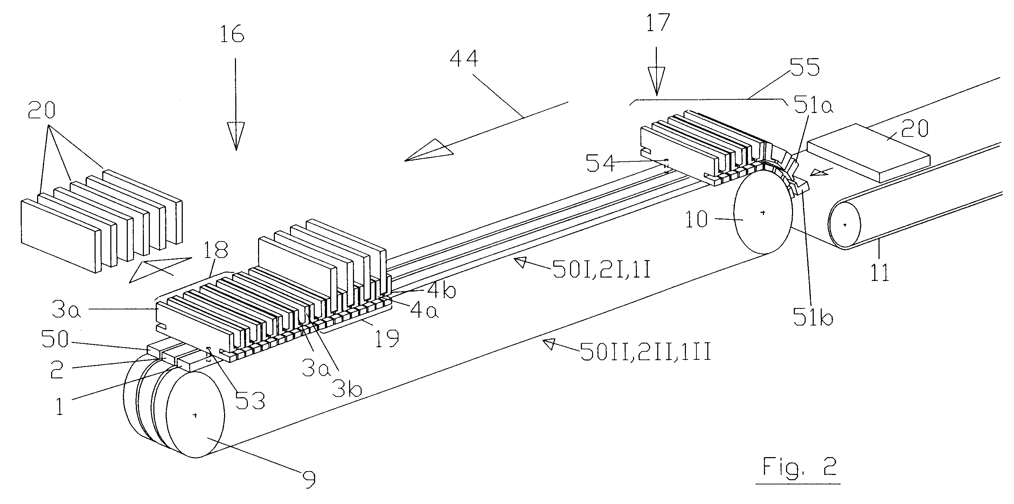

Demgegenüber zeigt Fig. 2 in der Prinzipdarstellung eine Lösung, die zum einen aus drei Endlosförderern 1, 2, 50 besteht, und darüberhinaus auch in wesentlichen in den Details anders aufgebaut ist:
Zum einen sind hier die Mitnehmer 3, 4, 51, die fluchtend in einer Reihe laufen, selbst seitlich formschlüssig in Längsrichtung durch U-förmige Führungsschienen 43a, 43b geführt, die entsprechende Vorsprünge der Mitnehmer von außen her umgreifen.

Zum anderen sind die Gruppen 18, 19, 55 von Mitnehmern, die an jeweils einem der Endlosförderer 1, 2, 50 befestigt sind, jeweils untereinander gelenkig in einer Art Schlange miteinander verbunden, und aus jeder Gruppe ist nur ein Mitnehmer, nämlich der in Förderrichtung 44 vorderste Mitnehmer, über einen Verbindungsstift 52, 53, 54 mit dem entsprechenden Endlosförderer 1, 2, 50 verbunden. Die Verbindungsstifte ragen dabei im wesentlichen senkrecht vom Endlosförderer 1, 2, 50 nach außen und in den Mitnehmer 3, 4, 51 hinein, und können dort gegebenenfalls von der Oberseite her mittels eines Schnellverschlusses etc. fixiert werden.

Desweiteren sind die einzelnen Mitnehmer 3, 4, 51, die in diesem Fall in Abhängigkeit des aufzunehmenden Produktes in der Seitenansicht einen U-förmigen Querschnitt besitzen, zweiteilig ausgebildet, und bestehen somit jeweils aus einem Vorderteil z.B. 3a und einem Hinterteil 3b.

Beim Herumführen um die Umlenkritzel 9, 10 spreizt sich damit der Innenraum zwischen Vorderteil und Hinterteil (z.B. 51a, 51b V-förmig auf, so daß im Bereich des hinteren Umlenkritzels 10 das Einlegen der quaderförmigen, flachen Produkte 20 besonders einfach möglich ist, und durch das anschließende Schließen der Mitnehmer 51 auf den normalen Zwischenraum bei Erreichen des oberen Trumes 50a die Produkte dann so paßgenau in den Mitnehmern aufgenommen sind, daß in diesem Zustand ein Einlegen kaum zu realisieren wäre. Sogar eine leichte Klemmung der Produkte 20 in den Mitnehmern 3, 4, 51 ist dadurch möglich.

Ein weiterer Vorteil ist die Wendung des Produktes um 90°, was besonders bei flachen, plattenförmigen Produkten, die in der Regel liegend auf einem Zuförderer 11 antransportiert werden, sinnvoll ist, wenn diese Produkte - wie häufig gewünscht - abgepackt werden sollen. Zusätzlich kann dabei die Anlieferung der Produkte im Aufnahmebereich 17 in einer Richtung entsprechend der Förderrichtung 44 geschehen, was eine längsgerichtete, schmale Ausbildung der Anlage und damit ein gutes Einbinden in eine in der Regel längsgerichtete Produktionslinie ermöglicht.

Zur Verbesserung der Übersichtlichkeit ist die Vorrichtung in Fig. 2 im Teilschnitt dargestellt, und es ist pro Endlosförderer 1, 2, 50 nur eine Gruppe 18, 19, 55 von Mitnehmern 3, 4, 51 dargestellt.

Um die Leertransport-Wege zu verringern, können jedoch an jedem der Endlosförderer 1, 2, 50 auch zwei solcher Gruppen von Mitnehmern angeordnet sein, und zwar für jeden Endlosförderer betrachtet diametral gegenüberliegend, so daß nach dem Entleeren einer solchen Gruppe z.B. 18 im Entnahmebereich 16 nicht diese Gruppe in den Aufnahmebereich 17 verfahren werden muß, sondern die diametral gegenüberliegende andere Gruppe des gleichen Endlosförderers, die in diesem Falle bereits kurz vor dem Aufnahmebereich 17 liegt, und nur noch einen kurzen Verfahrweg dorthin zurücklegen muß.

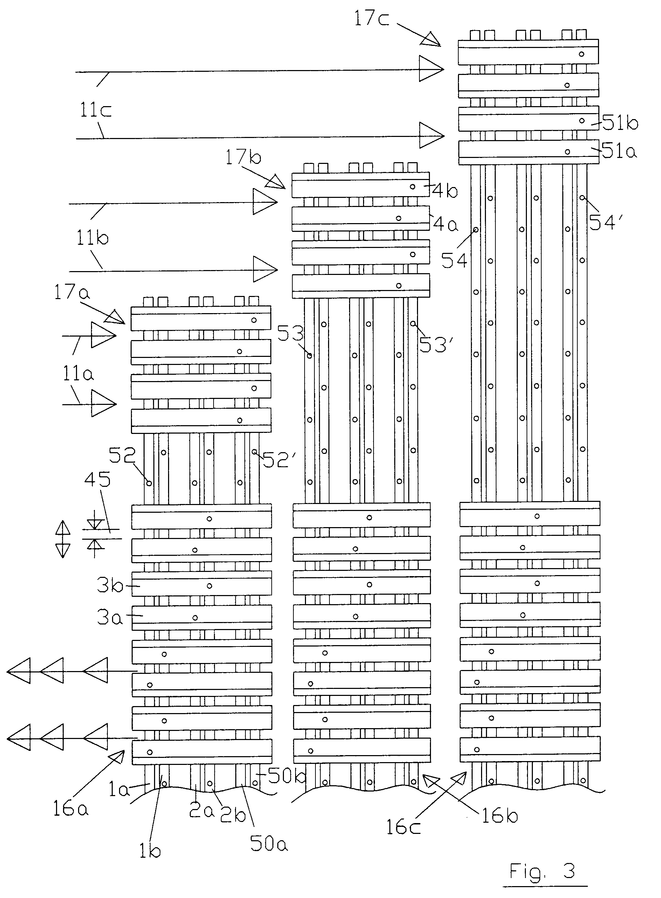

Fig. 3 zeigt in der Aufsicht eine Lösung, in der drei erfindungsgemäße Vorrichtungen parallel nebeneinander angeordnet sind, wie sie in etwa der Lösung gemäß Fig. 2 entsprechen.

Wie der Prinzipdarstellung der Fig. 3 zu entnehmen, sind die drei parallel nebeneinander liegenden Gruppier- und Puffervorrichtungen unterschiedlich lang, enden jedoch auf der gleichen Höhe. Der gestaffelte Beginn der drei Vorrichtungen wird dabei dafür benutzt, die im 90°-Winkel zu den Gruppiervorrichtungen anliefernden Zuförderer 11a, 11b, 11c ohne gegenseitige Behinderung parallel versetzt anzuordnen. Die drei Aufnahmebereiche 17a, 17b, 17c sind somit in Längsrichtung der Gruppiervorrichtungen gegeneinander versetzt, während die Entnahmebereiche 16a, 16b parallel nebeneinander liegen, was das Unterbringen der hier aus den einzelnen Gruppiervorrichtungen zu entnehmenden Entnahmegruppen 21a, 21b, 21c in einer gemeinsamen Umverpackung sehr erleichtert, unabhängig davon, ob das Entnehmen aus den Gruppiervorrichtungen mittels Roboter oder einfacher Schiebeeinrichtungen erfolgt.

Ein weiterer Unterschied der Lösung gemäß Fig. 3 gegenüber Fig. 2 liegt darin, daß in Fig. 3 jeder einzelne Endlosförderer z.B. 1, 2, 50 wiederum aus zwei getrennten Teil-Endlosförderern (z.B. 1a, 1b) besteht, die vorzugsweise auch eng nebeneinander parallel geführt sind.

Dabei bilden die Gruppen 18, 19, 55 aus Mitnehmern keine in sich gelenkig ausgebildete Schlange, sondern die Gruppe besteht aus zwei ineinander verschachtelten Schlangen, wobei die eine Schlange aus den Vorderteilen z.B. 3a der Mitnehmer besteht, während die andere Schlange aus den Hinterteilen 3b dieser Mitnehmer besteht.

Jede dieser Schlangen ist mit einem der Teil-Endlosförderer (z.B. 1a bzw. 1b) verbunden, wobei in der Darstellung der Fig. 3 wiederum jedes einzelne der Vorder- und Hinterteile 3a, 3b der Mitnehmer einzeln mit einem der Teil-Endlosförderer 1a, 1b verbunden ist, wie durch die angedeuteten Verbindungsstifte 52, 52', 53, 53', 54, 54' angedeutet. Ebenso könnte jedoch nur ein Teil jeder Schlange mit einem der Teil-Endlosförderer verbunden sein, wie anhand von Fig. 2 erläutert.

Durch diese Verbindung der Vorderteile 3a der Mitnehmer 3 mit dem Teil-Endlosförderer 1a und der Hinterteile 3b der Mitnehmer 3 mit dem Teil-Endlosförderer 1b kann der Abstand vom Vorderteil 3a zum Hinterteil 3b für alle Mitnehmer des Endlosförderers 1 gemeinsam verstellt werden, indem die beiden Teil-Endlosförderer 1a und 1b relativ zueinander etwas bewegt werden. Dadurch kann der Abstand 45 zwischen Vorderteil 3a und Hinterteil 3b erweitert oder verringert werden, wie durch die Pfeile angedeutet. Dadurch ist eine Anpassung bei sich ändernden Produktabmessungen möglich, oder auch nur eine Optimierung der Gruppier- und Puffervorrichtung im Hinblick auf das Handling der Produkte 20, ohne daß die hierfür sehr wichtige Bestimmung des Freiraumes in jedem der Mitnehmer von vornherein konstruktiv einmalig exakt festgelegt werden müßte.

Die Figur 4 zeigt dagegen eine Darstellung einer konkreten konstruktiven Lösung:
In Figur 4 ist der Endlosförderer 2 in der Seitenansicht dargestellt, und teilweise sind dabei die dahinterliegenden, nicht sichtbaren, entsprechenden Teile des Endlosförderers 1 strichpunktiert dargestellt.

Der Endlosförderer 2 bewegt sich dabei immer im Uhrzeigersinn, wobei im Zuführbereich 17 die Mitnehmer 3, die beispielsweise auf dem dahinterliegenden, nicht sichtbaren Endlosförderer 1 befestigt sind, der Reihe nach mittels des Zuförderers 11 gefüllt werden und zu diesem Zweck der dahinterliegende Endlosförderer 1 immer um einen Abstand der Mitnehmer 3 weiterbewegt sind.

Die in der rechten Bildhälfte dargestellten Mitnehmer 4 sind demgegenüber mit dem sichtbaren Endlosförderer 2 verbunden, und wurden unmittelbar vorher im Gruppierungsbereich 16 gruppenweise zur Verpackungsmaschine hin von den Produkten 20 entleert, so daß sie sich momentan um das Ritzel 5 herum vom Funktionstrum 2a in Richtung funktionsloses Rücktrum 2b bewegt. Wie zu erkennen, sind im Falle der Figur 4 die Mitnehmer 4 in Längsrichtung der Kette deutlich länger als ein Kettenglied, und sind deshalb in Längsrichtung hälftig unterteilt, so daß jede Hälfte an einem Kettengleid befestigt ist. Dadurch ergibt sich zwar ein Aufspreizen der beiden Hälften jedes Mitnehmers 4 beim Herumführen um eines der Ritzel, was jedoch unschädlich ist, da während des Herumführens des Ritzels keine Produkte 20 in den Mitnehmern 3, 4 aufgenommen sind, da sich der gesamte Funktionsbereich des Endlosförderers innerhalb des einen trumes 2a befindet. Durch die Aufspaltung der Mitnehmer 4 in Einzelteile ist jedoch eine wesentlich bessere Befestigung und Führung bezüglich der Kette des Endlosförderers 2 erreichbar.

Zwar besitzen die Mitnehmer 3, 4 der Figur 4 eine andere Form als in der Prinzipdarstellung der Figur 1, sind jedoch ebenfalls wieder stirnseitig sowie nach oben, also von der umlaufenden Kette des Endlosförderers 2 nach außen weisend, offen. In welche Richtung die Mitnehmer 3, 4 offen sind, richtet sich jedoch ausschließlich nach der Zulieferungs und Entnahmerichtung, und den dafür verwendeten Hilfsmitteln.

### BEZUGSZEICHENLISTE

- 1, 2: Endlosförderer
- 1a, 1b: Teil-Endlosförderer
- 1l, 1ll: Trume
- 2a, 2b: Teil-Endlosförderer
- 2l, 2ll: Trume
- 3, 4: Mitnehmer
- 3a, 3b: Mitnehmer-Teile
- 4a, 4b: Mitnehmer-Teile
- 5, 6: Antriebsritzel
- 7, 8: Servomotoren
- 9, 10: Umlenkritzel
- 11: Zuförderer
- 12: Verbindungsprofil
- 13, 14: Fotozellen
- 15: Schieber
- 16: Entnahmebereich
- 16a, 16b: Entnahmebereiche
- 17: Aufnahmebereich
- 17a, 17b, 17c: Aufnahmebereiche
- 18, 19: Gruppen
- 18a, 18b: Gruppen
- 19a, 19b: Gruppen
- 20: Produkt
- 21: Entnahmegruppe
- 21a, 21b, 21c: Entnahmegruppen
- 22: Tragprofil
- 23, 24: Abdeckplatte
- 25: Längsrichtung
- 26: Drehplatte
- 27, 28: Abschnitte
- 29: Lagerzapfen
- 30: Spannungszapfen
- 31: Tragplatte
- 32: Lager
- 33: Hohlraum
- 34: Aussparung
- 35: Bolzen
- 36: Tellerfederpaket
- 37: Kontermutter
- 38: Bohrung
- 39, 40: Nuten
- 41, 42: Tragbohrung
- 43a, 43b: Führungsschienen
- 44: Förderrichtung
- 45: Abstand
- 50: Endlosförderer
- 50a, 50b, 50c: Endlosförderer
- 51: Mitnehmer
- 51a: Vorderteil
- 51b: Hinterteil
- 52, 52': Verbindungsstift
- 53, 53': Verbindungsstift
- 54, 54': Verbindungsstift
- 55: Gruppe

## Patentansprüche

**1.** Gruppier- und Puffervorrichtung
- zum Sammeln stückiger Produkte in einem Zuführbereich (17),
- zum Zwischenspeichern dieser Produkte sowie
- zum Bereitstellen einer Anzahl dieser Produkte zur Entnahme in Entnahmegruppen in einem Entnahmebereich (16) und
bestehend aus wenigstens einem Endlosförderer, den Mitnehmern (3,4) zur Aufnahme und zum Transport der Produkte, und einem Zuförderer der Produkte,
**gekennzeichnet durch**
folgende Merkmale:
a) es sind wenigstens zwei parallele Endlosförderer (1,2) vorhanden, die mit wenigstens einem Trum (1l, 2l) parallel zueinander laufen,
b) jeder Endlosförderer (1,2) hat wenigstens eine Gruppe (18, 19) von Mitnehmern (3,4),
c) die Endlosförderer (1,2) sind unabhängig voneinander steuerbar.

**2**. Vorrichtung nach Anspruch 1,
**dadurch gekennzeichnet, daß**
der Zuführbereich (17) und der Entnahmebereich (16) jeweils innerhalb des gleichen, zueinander parallelen Trums (1l, 2l) der Endlosförderer (1, 2) angeordnet ist.

**3**. Vorrichtung nach einem der vorhergehenden Ansprüche,
**dadurch gekennzeichnet, daß**
der Zuführbereich (17) und der Entnahmebereich (16) jeweils innerhalb in Transportrichtung aneinander anschließender Trume der Endlosförderer (1, 2) angeordnet ist.

**4**. Vorrichtung nach einem der vorhergehenden Ansprüche,
**dadurch gekennzeichnet, daß**
die an einem Endlosförderer (1, 2) befestigten Mitnehmer (3) bzw. (4) den jeweils anderen Endlosförderer (2, 1) übergreifen.

**5**. Vorrichtung nach einem der vorhergehenden Ansprüche,
**dadurch gekennzeichnet, daß**
die Endlosförderer (1, 2) in vertikalen Ebenen parallel zueinander geführt sind.

**6**. Vorrichtung nach einem der vorhergehenden Ansprüche,
**dadurch gekennzeichnet, daß**
die Mitnehmer (3, 4) einer Gruppe (18, 19) gelenkig miteinander verbunden sind und nur der erste oder letzte Mitnehmer jeder Gruppe (18, 19) mit einem der Endlosförderer (1, 2) verbunden ist.

**7**. Vorrichtung nach einem der vorhergehenden Ansprüche
**dadurch gekennzeichnet, daß**
die Anzahl der Mitnehmer einer Gruppe (18, 19) ein ganzzahliges Vielfaches der Anzahl von Produkten einer Entnahmegruppe (21) ist.

**8**. Vorrichtung nach einem der vorhergehenden Ansprüche,
**dadurch gekennzeichnet, daß**
- die Anzahl der Endlosförderer mindestens drei beträgt und
- die Anzahl der Mitnehmer einer Gruppe (18, 19) kein ganzzahliges Vielfaches
der Anzahl von Produkten einer Entnahmegruppe (21) ist.

**10**. Vorrichtung nach nach einem der vorhergehenden Ansprüche,
**dadurch gekennzeichnet, daß**
die Förderrichtung des Zuförderers (11) rechtwinklig zu der Richtung und auf der Höhe der parallelen Trume der Endlosförderer (1, 2) verläuft.

**11.** Vorrichtung nach einem der Ansprüche 1 bis 10,
**dadurch gekennzeichnet, daß**
die Förderrichtung des Zuförderers (11) rechtwinklig zu der Richtung und auf der Höhe der den parallelen Trumen der Endlosförderer (1, 2) vorangehenden Trume verläuft.

**12**. Vorrichtung nach einem der Ansprüche 1 bis 10,
**dadurch gekennzeichnet, daß**
die Förderrichtung des Zuförderers (11) parallel zu der Richtung der parallelen Trume der Endlosförderer (1, 2) und auf der Höhe der den parallelen Trumen vorangehenden Umlenkrolle verläuft und die Mitnehmer (3, 4) bezüglich der Umlenkrolle radial abstreben.

**13**. Vorrichtung nach einem der vorhergehenden Ansprüche,
**dadurch gekennzeichnet, daß**
jedem Endlosförderer (1, 2) ein Servomotor (7, 8) zugeordnet ist.

**14**. Vorrichtung nach einem der vorhergehenden Ansprüche,
**dadurch gekennzeichnet, daß**
die Mitnehmer (3, 4) aus je wenigstens zwei Mitnehmer-Teilen (3a, 3b, und 4a, 4b) bestehen.

**15**. Vorrichtung nach einem der vorhergehenden Ansprüche,
**dadurch gekennzeichnet, daß**
- die Endlosförderer (1, 2) aus je wenigstens zwei parallelen Teil-Endlosförderern (1a, 1b, und 2a, 2b) bestehen und
- an jedem Teil-Endlosförderer (1a, 2a, bzw. 1b, 2b) jeweils die einander ergänzenden Gruppen (18a, 19a bzw. 18b, 19b) aus den Mitnehmer-Teilen (3a, 4a, bzw. 3b, 4b) befestigt sind.
